# EUROPEAN PATENT APPLICATION

(11) **EP 3 869 433 A1**
(43) Date of publication of application: **25.08.2021**
(21) Application number: 21157713.5
(22) Date of filing: 17.02.2021
(51) Int. Cl.: G06Q 10/10, G06Q 30/04, G06Q 50/18

(54) **METHOD AND COMPUTER PROGRAM PRODUCT FOR RECORDING A TIME EXPENDITURE**

(30) Priority: 19.02.2020 BE 202005109
(71) Applicant: Flexsoft nv, 9051 Gent (BE)
(72) Inventor: Desaver, Alexander, 9051 Gent (BE)
(74) Representative: Brantsandpatents bvba

(57) **Abstract**

The present invention relates to a method and a computer program product for recording a time expenditure by a user on a device. The device comprising a processor, a display, a memory and a communication interface. Preferred embodiments of the invention are discussed in claims 2 to 13 as well as throughout the description. The present invention is extremely advantageous as it fulfils, among other things, the latent need to automate the completion of timesheets.

## Description

### TECHNICAL FIELD

The invention relates to a method and computer program product for recording a time expenditure by a user on an activity associated with a topic.

### PRIOR ART

Systems, computer program products, as well as methods for recording a time expenditure are known in the art.

US 2006 004 540 describes a method, system and computer program product for recording time and associating this time with an accounting category.

US 2017/0169520 describes a system and method for tracking, reporting, billing and accounting for the time that a service provider, such as a lawyer or other user, spends on their job.

US 2003/0204367 discloses a system and method for automatically tracking time spent by end users in various applications on the end users' computers while performing tasks.

There is a need in the current state of the art for a system that allows a user to keep an overview of the recorded time expenditure.

In particular, there is a need in the current state of the art for a system that is accessible from multiple platforms.

In particular, there is a need in the current state of the art for a system that is simple in implementation and personalisation as well as ensuring the security of the data accessed during a time expenditure.

The present invention aims to resolve at least some of the above-mentioned problems.

### SUMMARY OF THE INVENTION

In a first aspect, the invention relates to a method for recording a time expenditure of a user according to claim 1.

In a second aspect, the invention relates to a computer program product for recording a time expenditure by a user according to claim 14.

Preferred embodiments of the present invention are discussed in claims 2 to 13 as well as throughout the description.

### BRIEF DESCRIPTION OF THE DRAWINGS

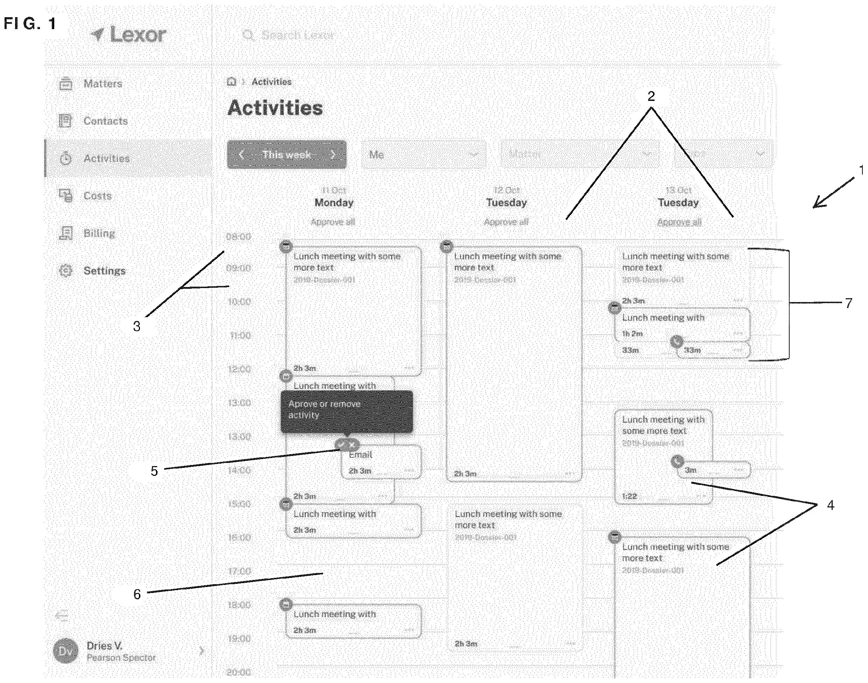

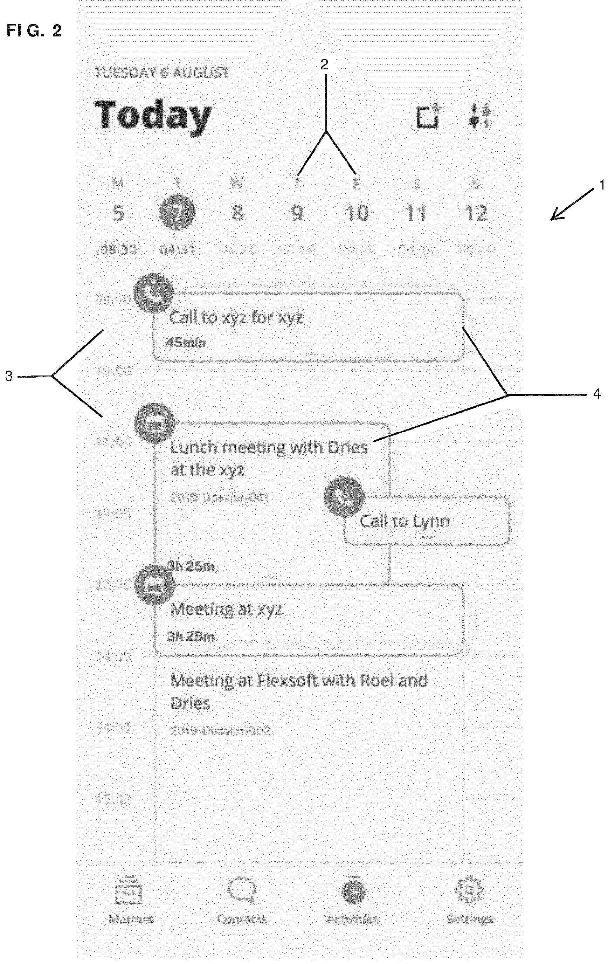

**Figures 1** **and** **2** show a screenshot of a calendar configuration comprising a plurality of predetermined time expenditures.

### DETAILED DESCRIPTION OF THE INVENTION

The invention relates to a method and computer program product for recording a time expenditure by a user on an activity associated with a topic. The invention was summarised in the section provided for this purpose. In what follows, the invention is described in detail, and preferred embodiments are explained.

Unless otherwise defined, all terms used in the description of the invention, including technical and scientific terms, have the meaning as commonly understood by a person skilled in the art in the technical field to which the invention pertains. For a better assessment of the description of the invention, the following terms are explained explicitly.

In the present document, 'a(n)' and 'the' refer to both the singular and the plural, unless the context clearly presupposes otherwise. For example, 'a topic' means one or more than one topic.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

In a first aspect, the invention relates to a method for recording a time expenditure by a user on an activity associated with a topic. Preferably, the activity is performed on a device. Preferably, the device comprises a processor, a memory and a communication interface. Preferably, the communication interface comprises a display. Preferably, an application for performing the activity by interacting with data associated with the topic is executed on the processor. Preferably, the memory comprises the data. Preferably, the method comprises the step of determining on the processor a time interval in which the user is active on the application for the topic. Preferably, the time interval is determined by recording the opening and closing of at least a part of the data in the application. More preferably, the method further comprises the step of displaying on the display the determined time interval in which the user is active. More preferably, the method further comprises the step of confirmation by the user of the time interval shown on the display in which the user is active. Even more preferably, the confirmation of the time interval shown on the display takes place by means of the communication interface.

In a second aspect, the invention relates to a computer program product for recording a time expenditure by a user on an activity associated with a topic. Preferably, the activity is performed on a device. Preferably, the device comprises a processor, a memory and a communication interface. Preferably, the communication interface comprises a display. Preferably, the computer program product is suitable for execution on the device. Preferably, the processor is suitable for executing an application to interact with data associated with the topic. Preferably, the memory of the device comprises the data. Preferably, the computer program product comprises instructions for determining on the processor a time interval in which the user is active on the application for the topic. More preferably, the time interval is determined by recording the opening and closing of at least a part of the data in the application. Preferably, the computer program product also comprises instructions for displaying on the display the determined time interval in which the user is active. More preferably, the current computer program product also comprises instructions for the user to confirm the time interval displayed on the display in which the user is active. Even more preferably, the confirmation of the time interval shown on the display takes place by means of the communication interface.

A person having ordinary skill in the art will appreciate that the method can be implemented in the computer program product. In what follows, both aspects of the present invention are therefore treated together. Furthermore, each feature described above as well as below, may relate to either of both aspects, even if the feature is described in conjunction with a specific aspect of the present invention.

The object of the present invention is the recording of a time expenditure by a user on an activity associated with a topic. However, the present invention also has the object of associating a rate with said time expenditure. Furthermore, the present invention also has the object of billing said time expenditure with said associated rate. According to a particular embodiment, the object of the present invention is to record a time expenditure by a user who is working at an hourly rate. Examples include, but are not limited to, an adviser, a consultant, a freelancer, and more in particular, for example, an accountant, an insurance broker, an IT professional, a programmer, etc. In a particular embodiment, the object of the present invention is recording a time expenditure by a user in a legal profession. Examples of a user in a legal profession include, but are not limited to, a lawyer, a legal expert, a civil-law notary, etc. Very preferably, said user is a lawyer. The activity associated with the topic may relate to any assignment that can be performed by a user through interaction with data associated with said topic.

The present invention is extremely suitable for the automatic or semi-automatic recording of a time expenditure. After all, a general problem when a user works on a topic at an hourly rate is filling in time records, such as a timesheet. Such action takes a substantial amount of time, effort and attention from a user. After thorough questioning by the inventors, it appears that many of the users mentioned, in particular users in a legal profession such as lawyers, have a latent need to automate this process. The present invention fulfils this need. The above problem is also further explained in example 1. In addition, recording a time expenditure according to the present invention has the advantage that the time expenditures by different users is normalised and made more objective. As a result, objective assumptions can be made regarding the time performed by a user. For example, an employer can thus obtain a better overview of the performance of various employees. Furthermore, objectivity also has the advantage of greater customer confidence.

In a simple embodiment of the present invention, the device comprises at least a processor, a memory and a communication interface comprising a display. Such a device is known, for example, in the prior art as a computer. Alternatively, such a device is also known in the art as a computer system. It is obvious to a person of ordinary skill in the art that the aforementioned parts are operationally and communicationally connected. Furthermore, it is also apparent to a person of ordinary skill in the art that any device or system comprising the aforementioned components can be understood as a device for recording the user's time expenditure or for executing the instructions of the computer program product.

'Communication interface', as used herein, is to be understood as a term known in the art, also known as a 'user environment' or 'user interface', and preferably refers to a textual user interface or a graphical user interface, and refers to any software and hardware of a device intended to carry and transmit communication between a user and the system, such as, for example, but not limited to, a keyboard, a monitor or display, a tablet, a smartphone, or any combination of one or more of the aforementioned equipment.

'Memory', as used herein, is to be understood as a term known in the art, also known as a 'data bank' or a 'database', and preferably refers to a data carrier, preferably an electronic data carrier, which is provided for managing, storing and transmitting said data associated with the topic as well as the data associated with the time expenditure of said user. Examples of such data include, but are not limited to, a text file, a spreadsheet file, an email file, a calendar file comprising, for example, an appointment of the user, etc.

According to a simple embodiment of the present invention, the processor is suitable for executing an application to interact with data associated with the topic. Preferably, the memory comprises said data. Interacting with data associated with said topic should preferably be understood as one or more selected from the following group: consulting, editing or using said data. Thus, the application, as used herein, is a means or tool for performing an activity or assignment, by said user, associated with said topic.
'Application', as used herein, is to be understood as a term known in the art, also known as an 'app', a 'program' or an 'application', and preferably refers to a computer program, preferably intended for an end user, executed by an operating system on a device as used herein. Examples of such an application include, but are not limited to, a word processing program such as Microsoft Word, a spreadsheet program such as Microsoft Excel, a 'personal information manager' and email client such as Microsoft Outlook, a calendar program, etc. Preferably, the operating system is Windows, more preferably comprising Microsoft Office365. Windows is the most widespread operating system.

According to one embodiment, the device is a computer system comprising a first server, a second server and a user device. Each of the servers and the user device is capable of communication within the computer system, preferably over a network such as the internet. The user device is associated with a user within such an embodiment. Any of the aforementioned components, i.e. the processor, the memory and the communication interface, may be provided within such a specific embodiment on both the server and the user device. For example, the processor for processing the various steps as well as instructions may be provided on both the server and the user device. Preferably, the communication interface is provided on the user device. Preferably, the memory is provided on the user device. Such a computer system allows a central control of the recording of the time expenditure of a group of users.

According to a further embodiment, the first and second servers comprise a processor and a memory. Preferably, the first and second servers are cloud servers. Preferably, the user device comprises a processor, a memory and a communication interface. More preferably, the communication interface comprises a display. Preferably, the memory of said user device comprises said data. Preferably, said application is executed by the processor of the user device. By providing / executing the data as well as the application on the user device, they are immediately available to a user. Preferably, the memory of said first server comprises the variable parameter. More preferably, the first server is a cloud server for storage of metadata. Such a configuration uses existing cloud-based metadata. Preferably, the opening and closing of at least a part of said data in said application is recorded on said second server. More preferably, the second server is a cloud server for determining a time interval. Such a configuration centralises the determination of a time interval. Such centralisation allows process optimization by means of artificial intelligence algorithms. Centralisation also allows for fast error detection, for example by an administrator. To perform the above embodiment, the method comprises the steps of obtaining said variable parameter on the memory of said second server; determining on the processor of said second server a time interval in which said user is active on said application with an activity associated with said topic; and obtaining the determined time interval on said user device.

'Server', as used herein, is to be understood as a term known in the art, also known as a 'central server', a 'processing unit' or a 'central processing unit', and refers to a physical computer on which one or more computer modules are provided, each module comprising instructions for performing a specific set of tasks. The processing unit is provided with means for communicatively connecting different computer modules.

'User device', as used herein, is to be understood as a synonym for the term 'electrical user device' and refers to a term known in the art, which means a control unit and/or a computer device and/or a computer system, such as a smart device, which can provide network connectivity and processing resources. Examples of a smart device comprise amongst others a desktop computer, a mobile device or smartphone, a personal digital assistant (PDA), a laptop, a tablet device or tablet, smartwatch, etc.

In a particular embodiment, the user device is a computer system comprising one or more computers and a server. Within such an embodiment, the data can for instance be stored in a memory of the server. Such an implementation is often used in a company.

Preferably, all communication within the computer system is encrypted. It will be clear that any encryption technology known in the art can be used to encrypt the information transfer between the server and a user device and between the server and a user device as described by the present invention. Preferably, the encryption is done by means of a Transport Layer Security' (TLS) protocol. Such encryption increases the security of a user and the information on the database.

A simple embodiment of the present invention comprises determining on said processor a time interval in which said user is active on said application for said topic. The time interval is initially determined by recording the opening and closing of at least a part of said data in said application. Such recording gives a first indication of whether or not a user is actively working on a topic or at least part of said topic. The user is then recorded as active on said application for said topic when the part of the data associated with said topic is opened in said application and thus initiates the time interval. When the part of the data associated with said topic is closed in said application, the user is recorded as inactive on said application for said topic and the time interval thus ends. Such registration is easy to implement. Preferably, the determined time interval in which said user is active on said application for said topic is stored in said memory.

In a preferred embodiment, the time interval in which said user is active on said application for said topic is also further determined, on said processor, by recording a variable parameter comprised by metadata associated with the part of the data opened and closed in said application. Registration of a variable parameter comprised by the metadata has the advantage that the content of said data is not consulted. As a result, this does not jeopardise the confidentiality of the document. Such an embodiment is extremely advantageous for a user in a legal profession. After all, such a user is bound by professional secrecy. Moreover, registration of such a variable parameter is also advantageous as it provides a concise assessment of the document. Moreover, such a variable parameter is available for most data, i.e. file types.

'Metadata', as used herein, is to be understood as a term known in the art, and preferably refers to data describing the characteristics of a particular piece of data, such as, for example, a document. Such a document, i.e. data item, may for example refer to a text file. Examples of metadata for such a document are: an author, a date of writing, a publisher, a number of pages, a number of words, a language in which the document is written, etc. In the example of a text file, the variable parameter, comprised by metadata associated with the part of the data opened and closed in said application, can be understood, for example, as the number of pages or the number of words within the document.

Preferably, the step of determining the time interval in which said user is active on said application for said topic comprises the step of determining on said processor that said user is potentially active on said application for said topic when said part of the data associated with said topic is opened in said application. As already described above, recording the opening and closing of said application already gives a first indication of whether or not a user is active on a topic.

More preferably, the step of determining the time interval in which said user is active on said application for said topic comprises the step of determining on said processor that the potentially active user is active on said application for said topic by comparing a difference between a first and second value of said variable parameter at a first and second time point with a predetermined activity limit value. By comparing such a parameter at two time points, a period of inactivity in which the data is open is prevented from being recorded in the application as active work of the user on said topic. Such an embodiment is easy to implement. Such an embodiment safeguards the confidentiality of the data. In the example of a text file, the variable parameter can be the number of words within the file. If the difference between the number of words at a first and second time point exceeds a predetermined limit value, it can be concluded that the user was active within this time period. The time interval is then bounded by said first and second time points.

A simple embodiment of the present invention comprises displaying on said display the determined time interval in which said user is active. The determined time intervals can be continuously displayed on said display. Preferably, the determined time intervals are displayed on said display when an application is opened. Preferably, this application is a calendar application. In this way, for example, at the end of a day or week, a realistic picture can be shown to the user or a person responsible of what has been achieved that day or week. The embodiment also further comprises the step of confirming by said user, by means of said communication interface, the time interval shown on said display in which said user is active. The uniqueness of such an embodiment is that recording time is replaced with confirming recorded time. Such an embodiment is also advantageous since the user-validated information can be used as input for a self-learning algorithm which can then be used to further improve the recording of time expenditure.

Preferably, a plurality of time intervals are determined in which said user is active on said application for said topic. Such an embodiment represents a typical user work environment. After all, a user may work on said topic at several moments during a certain period of time, such as for instance a day. A possible interruption of such a work period is due, for example, to an unexpected telephone call, a lunch break, etc.

A preferred embodiment of the present invention comprises combining at least two of the plurality of time intervals. This prevents a large number of short expenditures from being communicated, for example to a customer by means of an invoice. The combining of two or more of the plurality of time intervals can be done by a user. As a result, a user can easily keep an overview of the performance delivered over a certain period of time, such as for instance a day, week, etc. Preferably, the plurality of determined time intervals are shown on said display. Preferably, at least some of the plurality of time intervals determined are displayed on said display. The invention then preferably further comprises the step of combining at least two of said plurality of determined time intervals shown on said display by said user, by means of said communication interface. The manually combined time intervals can also serve as a training set for a neural network, as is, for example, further explained below.

Alternatively, said combining of at least two of the plurality of determined time intervals can be done automatically. This minimizes the time spent by a user on time recording. Such an embodiment preferably comprises the steps, performed on the processor, of: identifying a first parameter associated with a first determined time interval; identifying a second parameter associated with a second predetermined time interval; determining a difference between said first and second parameters; and comparing said difference with a predetermined limit value. For example, the parameters may be respectively a start and end time of said first and second determined time interval. When the difference between the aforementioned two parameters becomes smaller than a predefined limit value, both intervals can be combined. Such an embodiment can also be done by a trained neural network. For example, the input of such neural network can come from historical user data comprising manually combined determined time intervals.

Preferably, a plurality of time intervals are determined in which said user is active on an application selected from a plurality of applications for said topic. Such an implementation represents a typical user work environment. After all, a user may work on several aspects of the topic during a certain period of time, such as a day, for example. In this way, a user may write an advice in a word processing program, write an email in an email client, record an appointment in a calendar program, etc., within one and the same period.

In a preferred embodiment of the present invention, said processor is suitable for executing a plurality of applications for interacting with data associated with said topic. Preferably, the present invention further comprises the step of determining on said processor a time interval in which said user is active on two or more of said plurality of applications for said topic. Preferably, the present invention further comprises the step of combining at least two predetermined time intervals for different applications in which said user is active for said topic. By combining time intervals determined for a time expenditure by means of a different application, for the same topic, an overview is retained for a user. The combining of two or more of the plurality of time intervals can be done by a user. According to an alternative embodiment, the combining of at least two of the plurality of determined time intervals can be done automatically. Such an implementation can also be done, for example, by a trained neural network. For example, the input of such neural network can come from historical user data comprising manually combined determined time intervals.

A preferred embodiment of the present invention further comprises the step of associating on said processor an activity description with the determined time interval in which said user is active on said application for said topic based on metadata associated with the part of the data opened and closed in said application. By linking an activity description to a time expenditure, a user can easily keep an overview of various assignments performed on different applications as well as for different topics. An activity description for an assignment performed on, for example, a word processing program can comprise an author, a subject description, a number of written words, etc. The aforementioned activity descriptions can be extracted from metadata. For example, the number of words written can be determined from a difference between the number of words at the start of the time expenditure and at the end of said time expenditure.

A preferred embodiment of the present invention further comprises the step of associating on said processor a rate with the determined time interval in which said user is active on said application for said topic. By linking a rate to the determined time interval, it can be invoiced immediately. Preferably, the rate is associated with the topic. Preferably, the rate is associated with said user. Such an implementation is in line with standard business practices. Such a system can be used in a company structure with several employees. The aforementioned employees may then have different positions as well as a different hourly rate. In addition, such an implementation minimises the time expenditure that a user must spend on a topic on a device.

According to one embodiment, a feature is associated with at least a part said data. Based on this feature, a plurality of historical activities and associated historical topics can be determined. The feature is, for example, a customer number, a file type, etc. Preferably, a rate is then associated with said data based on historical rates associated with said plurality of historical activities and associated historical topics. Such a configuration provides a prediction of a rate for the activity associated with the topic. Even more preferably, said methodology is dynamic. For example, it can be determined at predetermined time points whether the predicted rate corresponds to the current time expenditures with corresponding rates.

According to one embodiment, the determined rate is positioned in a distribution comprising a plurality of historical rates. As such, the present invention provides a system for giving a client confidence that the stated amount is realistic. Preferably, the method further comprises the steps of associating on said processor a set of historical topics with the data associated with said topic, each of said set of historical topics being associated with a historical rate; establishing a distribution, on said processor, comprising said set of historical topics plotted against each corresponding historical rate; and positioning on said processor said rate in said distribution. Implementation of such methodology is simple, fast and efficient. Preferably, said distribution is a statistical distribution.

According to one embodiment, the method further comprises the step of determining on said processor a quotation for recording a time expenditure for said topic. Preferably, this quotation is determined on the basis of a plurality of historical rates. More preferably, the quotation is determined for a topic based on a plurality of historical rates, each associated with a historical topic. More preferably, this association is determined by means of a neural network.

Preferably, a meta tag is associated with or inserted in the metadata of the part of said data for which said feature has been identified. Such a meta tag may comprise information that is not available by default in a set of metadata. In a specific preferred embodiment, said meta tag comprises company related information. Examples include amongst others a file name, a status, a business type, subject and/or assignment related info, etc. The association or insertion of the meta tag can be done by a user. Alternatively, associating or inserting the meta tag can be done automatically.

A preferred embodiment for associating a meta tag with or inserting it into metadata comprising the steps of: identifying on said processor a feature associated with at least a part of said data; associating on said processor a meta tag with the part of said data for which said feature has been identified; and adding the associated meta tag, on said processor, to the metadata of the part of said data for which said feature has been identified. Examples of the feature include, but are not limited to, a title, a file code, a keyword, etc.

In a further preferred embodiment for associating a meta tag with or inserting it into metadata, the associating on said processor of said meta tag with the part of said data for which said feature was identified takes place based on relational data between historical data and manually associated meta tags determined by means of a trained neural network. For example, the input of such neural network can come from historical user data comprising manually associated or inserted meta tags. This implementation is simple, fast and efficient.

A preferred embodiment for determining a correction time interval preferably comprises the steps of: associating on said processor a historical data set with the part of the data opened and closed in said application, said historical data set being associated with a historical time interval; and determining on said processor a correction time interval in which said user is active on said application for said topic by comparing the determined time interval with said historical time interval. By correcting the determined time interval, a more accurate time expenditure of said user is obtained.

In a further preferred embodiment for determining a correction time interval, associating on said processor said historical data set with the part of the data opened and closed in said application is done on the basis of relational data between historical metadata associated with a historical data set and a manually associated training set comprising historical metadata determined by a trained neural network. For example, the input of such neural network can come from historical user data comprising manually corrected time intervals. Implementation of such methodology is simple, fast and efficient.

According to a particularly preferred embodiment, the determined time interval in which said user is active on said application for said topic is displayed on said display in a grid configuration. Such a configuration is clear and allows said user to observe at a glance the different time expenditures. Very preferably, the grid configuration is a calendar configuration. This allows a user to visually confirm his times. As a result, a user can very easily detect a time gap and fill it in manually. Moreover, such configurations are also advantageous as they allow to obtain qualitative training data which can then be inserted into a self-learning algorithm, such as, for example, a neural network. Most preferably, the determined time intervals are displayed in a calendar application. Alternatively, the calendar application is an extension or add-in provided in Outlook.

In what follows, the invention is described by way of non-limiting examples illustrating the invention, and which are not intended to or should not be interpreted as limiting the scope of the invention.

### EXAMPLES

### EXAMPLE 1 :

Example 1 illustrates problems associated with filling in timesheets. The inventors note that the current state of the art provides insufficient solutions in this regard.

Example 1 also relates to a calculation example for an opportunity cost for filling in timesheets for a law firm.

In an ideal world, employees keep track of time every day and managers can easily see what their people are working on, how long they have been busy on it, and what adjustments they need to make to make their people and the company work more efficiently. In reality, it is often a process wherein employees try to avoid filling in their timesheets as much as possible, after which managers or partners have to chase up their employees to fill it in accurately, which in turn leads to frustration for everyone. A common phenomenon is that a part of the company keeps accurate timesheets, in addition, there is always a significant group that does not do this. Despite all these frustrations, it is important to keep accurate time records to make strategic and business decisions or bill correctly.

Tracking timesheets is not only very frustrating, but also leads to enormous missed (opportunity) costs. A lawyer earns an average of €42,000 gross. When an assumption is made that says that an average of 2 hours per week is spent on timesheets, this means that approximately 100 hours are spent annually on timesheets, which is an estimated 2.5 weeks per year. For a law firm, the cost for this is then equal to €2019 (€42,000 * 2.5 weeks/year). Greater than this personnel cost is the lost opportunity. The average hourly rate for legal advice to the general public is €100 per hour, multiplied by the annual 100 hours an employee spends on timesheets, is a total annual lost opportunity of €10,000 per employee. All in all, it costs a law firm €12,019 per lawyer to complete timesheets. In an office where about 60 lawyers work, filling in timesheets means an annual (opportunity) cost of € 721,140.

Another important aspect is the lost turnover due to forgotten hours and incorrect registrations. After all, there is nothing as frustrating as receiving an invoice from a lawyer where the client feels that they were already being charged before they got in the door. On the other hand, the lawyer may have the feeling that he has not registered a large number of hours. This not only results in less turnover, but above all extra costs to collect outstanding invoices.

### EXAMPLE 2

Example 2 relates to a calendar configuration for displaying a plurality of determined time expenditures.

Figures 1 and 2 show a screenshot on a user device of a calendar configuration comprising a plurality of determined time expenditures.
Figure 1 shows a screenshot of a computer. Figure 2, on the other hand, shows a screenshot of a smartphone or tablet. The screenshot in Figure 1 shows a calendar configuration (1) with three columns (2) and a plurality of rows (3). The screenshot in Figure 2 shows a calendar configuration (1) with seven columns (2) and a plurality of rows (3). The columns shown (2) correspond to a weekday. The rows shown (3) correspond to an hourly division of each of the weekdays. A plurality of time expenditures (4) are shown. When the displayed time expenditures (4) are shown on a display of a computer or smartphone, a user can confirm or delete them. According to the current embodiment, the user has to click on a time expenditure to do this, after which a pop-up window (5) appears. The pop-up window (5) comprises a 'V' symbol for accepting the time expenditure (4) and an 'X' for deleting the time expenditure (4). Furthermore, the calendar configuration (1) clearly shows the user where the time periods are located for which no time interval has been determined (6), i.e. 'time gaps'. The user can then simply fill it in further manually.

In addition, the user also has the option to merge certain clusters (7) of time expenditures (4).

The present invention should not be construed as being limited to the embodiments described above and certain modifications or changes may be added to the examples described without having to re-evaluate the appended claims.

## Claims

1. Method for recording a time expenditure by a user on an activity associated with a topic, wherein said activity is performed on a device comprising a processor, a memory and a communication interface comprising a display, wherein an application for performing said activity through interaction with data associated with said topic is executed on said processor and wherein said memory comprises said data, the method comprising the steps of:
- determining on said processor a time interval in which said user is active on said application on an activity associated with said topic by recording the opening and closing of at least a part of said data in said application;
- displaying on said display the time interval determined on said processor; and
- confirming by said user, by means of said communication interface, the time interval shown on said display;
**characterised in that** the time interval in which said user is active on said application on an activity associated with said topic is further determined, on said processor, by recording a variable parameter comprised by metadata associated with the part of the data opened and closed in said application.

2. Method according to preceding claim 1, wherein the step of determining the time interval in which said user is active on said application on an activity associated with said topic comprises the steps of:
- determining on said processor that said user is potentially active on said application on an activity associated with said topic when a part of the data associated with said topic is open in said application; and
- determining on said processor that the potentially active user is active on said application on an activity associated with said topic by comparing a difference between a first and second value of said variable parameter with a predetermined activity limit value and wherein the first and second value of said variable parameter are determined at a first and second time point.

3. Method according to preceding claim 2, wherein said device is a computer system comprising a first server, a second server and a user device, said first and second server comprising a processor and a memory, wherein said user device comprises a processor, a memory and a communication interface, wherein said communication interface comprises a display, wherein the memory of said user device comprises said data, wherein said application is executed by the processor of said user device, wherein the recording of the opening and closing of at least a part of said data in said application takes place on said second server and wherein the memory of said first server comprises said variable parameter, the method further comprising the steps of:
- obtaining said variable parameter on the memory of said second server;
- determining on the processor of said second server a time interval in which said user is active on said application on an activity associated with said topic; and
- obtaining the determined time interval on said user device.

4. Method according to one of the preceding claims 1 to 3, wherein the method further comprises the step of associating on said processor an activity description of the time interval determined on said processor based on metadata associated with the part of the data opened and closed in said application.

5. Method according to one of the preceding claims 1 to 4, wherein the method further comprises the step of associating a rate on said processor with the time interval determined on said processor and wherein said rate is associated with said user.

6. Method according to one of the preceding claims 1 to 5, wherein a plurality of time intervals are determined in which said user is active on said application on an activity associated with said topic and wherein the method further comprises the step of combining at least two of the plurality of time intervals determined on said processor.

7. Method according to one of the preceding claims 1 to 6, wherein a plurality of time intervals are determined in which said user is active on said application on an activity associated with said topic and wherein at least some of the plurality of time intervals determined on said processor are displayed on said display, the method further comprising the step of said user, by means of said communication interface, combining at least two of the time intervals shown on said display.

8. Method according to one of the preceding claims 1 to 7, wherein a plurality of applications for performing an activity by interacting with data associated with said topic are executed on said processor and wherein on said processor a time interval in which said user is active on said plurality of applications on an activity associated with said topic is determined, the method further comprising the step of combining at least two time intervals determined on said processor for two or more different applications in which said user is active on said topic.

9. Method according to one of the preceding claims 1 to 8, wherein the time interval determined on said processor is displayed on said display in a calendar configuration.

10. Method according to one of the preceding claims 1 to 9, wherein the method further comprises the step of:
- identifying on said processor a feature associated with at least a part of said data;
- associating on said processor a meta tag with the part of said data for which said feature has been identified; and
- adding on said processor the associated meta tag to metadata of the part of said data for which said feature has been identified.

11. Method according to preceding claim 10, wherein associating on said processor said meta tag with the part of said data for which said feature has been identified is done based on relational data between historical data and manually associated meta tags and wherein said relational data is determined by means of a trained neural network.

12. Method according to one of the preceding claims 1 to 11, wherein the method further comprises the steps of:
- associating on said processor a historical data set with the part of the data opened and closed in said application, wherein said historical data set is associated with a historical time interval; and
- determining on said processor a correction time interval in which said user is active on said application for said topic by comparing the time interval determined on said processor with said historical time interval.

13. Method according to one of the preceding claims 3 to 12, wherein the method further comprises the steps of:
- associating on said processor a set of historical topics with the data associated with said topic, wherein each of said set of historical topics is associated with a historical rate;
- arranging on said processor a distribution comprising said set of historical topics in function of each corresponding historical rate; and
- positioning said rate in said distribution on said processor.

14. Computer program product for recording a time expenditure by a user on an activity associated with a topic, wherein said activity is performed on a device comprising a processor, a memory and a communication interface comprising a display, wherein said processor is adapted to execute an application for performing said activity by interacting with data associated with said topic and wherein said memory comprises said data, the computer program product comprising instructions for:
- determining on said processor a time interval in which said user is active on said application on an activity associated with said topic by recording the opening and closing of at least a part of said data in said application;
- displaying on said display the time interval determined on said processor; and
- confirming by said user, by means of said communication interface, the time interval shown on said display;
**characterised in that** the time interval in which said user is active on said application on an activity associated with said topic is further determined, on said processor, by recording a variable parameter comprised by metadata associated with the part of the data opened and closed in said application.
